# EUROPÄISCHE PATENTSCHRIFT

(11) **EP 0 428 933 B1**
(45) Veröffentlichungstag und Bekanntmachung des Hinweises auf die Patenterteilung: **11.09.1996**
(21) Anmeldenummer: 90121161.5
(22) Anmeldetag: 06.11.1990
(51) Int. Cl.: B41M 3/14, H01F 1/00, B44F 9/08

(54) **Mit plättchenförmigen Pigmenten beschichtete Materialien**
Materials coated with plate like pigmets
Matériaux recouverts de pigments en paillettes

(30) Priorität: 16.11.1989 DE 3938055
(43) Veröffentlichungstag der Anmeldung: 29.05.1991
(73) Patentinhaber: MERCK PATENT GmbH, D-64271 Darmstadt (DE)
(72) Erfinder: Prengel, Constanze, Dr., W-6108 Weiterstadt (DE); Franz, Klaus-Dieter, Dr., W-6233 Kelkheim (DE); Härtner, Hartmut, Dr., W-6109 Mühltal (DE); Kieser, Manfred, Dr., W-6100 Darmstadt (DE); Daacke, Axel v., Dr., W-8300 München (DE); Bernhardt, Klaus, W-6114 Gross Umstadt (DE)

(56) Entgegenhaltungen:
- EP-A- 0 298 603
- EP-A- 0 320 638
- EP-A- 0 341 047
- GB-A- 1 331 604
- US-A- 4 511 616

## Beschreibung

Die Erfindung betrifft Materialien für den Sicherheitsdruck mit einer, plättchenförmige pigmente enthaltenden Beschichtung, wobei die Beschichtung durch unterschiedliche Orientierung der Pigmentteilchen in definierten Bereichen eine Strukturierung aufweist.

Das Zeitalter hochmoderner Photokopiertechnik erfordert zunehmend die Bereitstellung neuer und verbesserter Materialien auf dem Gebiet des Sicherheitsdrucks.

In der EP-A-0 320 638 wurden dekorative Materialien beschrieben, die auf der Oberfläche in einer transparenten Matrix plättchenförmige Materialien wie z.B. Perlglanzpigmente enthalten, die hydrodynamisch ausgerichtet werden.

In der GB-A-1 331 604 wird ein Verfahren zur Herstellung von Magnetbändern beschrieben, wobei magnetisch ausrichtbare Partikel auf einem Trägermaterial im Magnetfeld gezielt orientiert werden.

Insbesondere sind mit Einführung des Farbkopierers zahlreiche Anstrengungen unternommen worden, Sicherheitsdruckfarben für den Kopierschutz zu entwickeln. Es besteht daher ein großes Bedürfnis nach derartigen Materialien, insbesondere solchen, die sich leicht und dauerhaft auf beispielsweise Kunststoff, Papier oder papierähnlichen Substraten aufbringen lassen und dabei beliebig strukturierbar sind, wobei aber aufgrund besonderer optischer Eigenschaften des aufgebrachten Materials fälschungssichere, bzw. nicht photokopierfähige Dokumente entstehen.

Diese Aufgabe wurde durch die vorliegende Erfindung gelöst.

Es wurde überraschenderweise gefunden, daß sich mit Hilfe von plättchenförmigen Pigmenten nicht kopierfähige, optische Strukturen einfach und dauerhaft erzeugen lassen, wenn man ein Material mit den Pigmenten so beschichtet, daß die Pigmentteilchen zunächst frei beweglich sind, daraufhin in definierten Bereichen eine unterschiedliche Orientierung der Pigmentteilchen erzeugt und letztlich alle Pigmentteilchen in der Beschichtung fixiert.

Gegenstand der Erfindung sind somit Materialien für den Sicherheitsdruck mit einer, plättchenförmige pigmente enthaltende Beschichtung, wobei die Beschichtung durch unterschiedliche Orientierung der Pigmentteilchen in definierten Bereichen eine Strukturierung aufweist.

Gegenstand der Erfindung ist auch ein Verfahren zur Herstellung von mit plättchenförmigen Pigmenten beschichteten Materialien für den Sicherheitsdruck, wobei die Beschichtung eine Strukturierung aufweist, dadurch gekennzeichnet, daß man das Material mit einer plättchenförmige Pigmente enthaltenden Formulierung beschichtet, in welcher die Pigmentteilchen zunächst beweglich sind, anschließend durch äußere Einwirkung in definierten Bereichen eine unterschiedliche Orientierung der Pigmentteilchen erzeugt und letzlich alle Pigmentteilchen in der Beschichtung fixiert.

Gegenstand der Erfindung ist schließlich die Verwendung derartiger Materialien auf dem Gebiet des allgemeinen Sicherheitsdrucks.

Mit plättchenförmigen Pigmenten sind alle glänzenden, plättchenförmigen Substrate wie glänzende Schichtsilikate und Oxide oder mit Oxiden beschichtete Materialien wie Glimmer, Talkum, Kaolin oder andere vergleichbare Mineralien, andererseits auch plättchenförmiges Eisenoxid, Wismutoxychlorid, basisches Bleicarbonat und die als Perlglanzpigmente bekannten metalloxidbeschichteten Glimmer, sowie Aluminiumplättchen und oxidbeschichtete Aluminiumplättchen gemeint.

Es können alle üblichen Perlglanzpigmente verwendet werden, z.B. Glimmerbeschichtungen mit farbigen oder farblosen Metalloxiden, wie TiO₂, Fe₂O₃, SnO₂, Cr₂O₃, ZnO und anderen Metalloxiden, allein oder in Mischung in einer einheitlichen Schicht oder in aufeinanderfolgenden Schichten. Diese Pigmente sind z.B. aus den deutschen Patenten und Patentanmeldungen 14 67 468, 19 59 998, 20 09 566, 22 14 545, 22 15 191, 22 44 298, 23 13 331, 25 22 572, 31 37 808, 31 37 809, 31 51 343, 31 51 355, 32 11 602 und 32 35 017 bekannt. Weiterhin können die genannten plättchenförmigen Substrate auch mit organischen Farbstoffen bzw. Pigmentmolekülen beschichtet sein.

Mit plättchenförmigen, magnetisch ausrichtbaren Pigmenten sind alle genannten plättchenförmigen Substrate gemeint, die eine magnetisch ausrichtbare Komponente enthalten.

Die Substrate werden dabei in geeigneter Weise mit einer magnetisch ausrichtbaren Komponente versehen, beispielsweise durch Vermischen oder durch gezielte Beschichtung. Von den magnetischen Komponenten, wie sie beispielsweise in Holleman-Wiberg, Lehrbuch der Anorganischen Chemie, 91.-100. Aufl., Walter de Gruyter, Berlin, New York 1985, S. 986-995 beschrieben sind, sind insbesondere ferro- und ferrimagnetische Stoffe, beispielsweise Ferrite des Typs M(II)O . Fe₂O₃ mit M(II) = Mn, Fe, Co, Ni, Cu, Zn, Mg oder Cd oder weiterhin auch andere magnetische Eisenoxide geeignet.

Bei den magnetisch ausrichtbaren Pigmenten werden als Substrate vorzugsweise die üblichen Perlglanzpigmente verwendet, z.B. Glimmerbeschichtungen mit farbigen oder farblosen Metalloxiden, wie TiO₂, Fe₂O₃, SnO₂, Cr₂O₃, ZnO und anderen Metalloxiden, allein oder in Mischung in einer einheitlichen Schicht oder in aufeinanderfolgenden Schichten. Besonders bevorzugt sind somit alle Interferenzfarben tragenden, changierenden und im magnetischen Feld orientierbaren Materialien. Werden die Substrate mit der magnetischen Komponente beschichtet, so sind insbesondere Eisen(II)oxid-haltige Beschichtungen bevorzugt.

Nach der DE-OS 36 17 430 sind Eisen(II)oxid-haltige plättchenförmige Pigmente zugänglich, die über einen hohen Glanz und die Interferenzfarben dünner Plättchen verfügen. Man kann dabei entweder direkt naßchemisch eine Magnetitschicht auf ein geeignetes plättchenförmiges Substrat auffällen oder aber das plättchenförmige Substrat zunächst mit Eisen(III)oxid beschichten, das anschließend zu einer Eisen(II)oxid-haltigen Schicht reduziert wird.

Die erfindungsgemäßen Materialien können nach verschiedenen Verfahren hergestellt werden. Zunächst wird das Trägermaterial selbst, beispielsweise Metall, Kunststoff, Glas, Keramik oder Papier mit dem plättchenförmigen Pigment so beschichtet, daß das Pigment gleichmäßig auf der Materialoberfläche vorliegt. Das Pigment wird dabei vorzugsweise in einem härtbaren Medium dispergiert und auf das Trägermaterial aufgetragen, z.B. aufgespritzt oder aufgerakelt. Als härtbares Medium kommen alle gängigen, dem Fachmann bekannten Farb- und Lackformulierungen wie Druckfarben, insbesondere Sicherheitsdruckfarben, im allgemeinen schmelzbare Druckfarben, Druckfarben auf Acrylat- oder Polyesterbasis, Amino-, Alkyd-, Acryl-, Epoxid-, Alkyd/Melamin-, Acryl/Melamin-, Polyester/Melamin- oder auch natürliche Harze sowie Nitrocellulose-, Polyurethan- oder vergleichbare Lacke und Lacksysteme, ferner auch wasserlösliche, mit Wasser verdünnbare oder Dispersionen der aufgeführten Systeme infrage. Der Umgang mit und die Verarbeitung von Polymeren und Harzen ist beispielsweise von J. A. Prane in "Introduction to Polymers and Resins", veröffentlicht von der Federation of Societies for Coatings Technology, Philadelphia, USA 1986 und der dort zitierten Literatur beschrieben.

Die pigmentbeschichteten Materialien werden dann in geeigneter Weise strukturiert. Dies kann nach verschiedenen Verfahren erfolgen. Je nach Beschaffenheit. der Pigmente kann man entweder durch Aushärtung definierter Bereiche in zeitlichen Abständen oder durch Ausrichtung von Pigmentteilchen in einem definierten Bereich eine Strukturierung erzeugen.

Für das erste Verfahren können praktisch alle genannten Pigmente verwendet werden. Beispielsweise können diese Pigmente, in einem strahlungshärtbaren Lacksystem eingearbeitet, durch gezielte Strahlungseinwirkung in definierten Bereichen eine Strukturierung erzeugen.

Verwendet man dabei z.B. ein UV-härtbares Lacksystem und belichtet das beschichtete Material über eine Photomaske, so läßt sich überraschenderweise auf der Materialoberfläche die Maskenstruktur erkennen. Anschließend wird dann der restliche Teil, gegebenenfalls nach Erzeugung einer oder mehrerer weiterer Strukturen nach dem genannten Verfahren, ausgehärtet. Das Auftreten optischer Strukturen wird, wie mikroskopische Aufnahmen zeigen, durch unterschiedliche Orientierung der Pigmentteilchen zueinander, insbesondere im Grenzbereich zwischen belichteter und unbelichteter Beschichtung, verursacht.

Nach der vollständigen Aushärtung sind die Strukturen reliefartig fixiert und vermitteln einen deutlich räumlichen Eindruck. Eine nach dem genannten Verfahren z.B. auf Papier erzeugte Beschriftung ist nicht kopierfähig, eine Farbphotokopie läßt sich muhelos vom Original unterscheiden. Beispiele für geeignete UV-härtbare Bindemittelsysteme sind publiziert von K. Dorfner und J. Ohngemach in einem Vortrag auf der "Radcure Conference", Sept. 10-13, 1984, Atlanta, Georgia, USA.

Bei der Verwendung thermisch härtbarer Systeme ist die Nacheinanderausführung der Härtungsschritte durch den Einsatz heizbarer Metallraster oder Schablonen realisierbar. Darüberhinaus lassen sich auch Raster oder Schablonen einsetzen, die aus Wärme- bzw. IR-Strahlung absorbierenden abschirmenden Materialien gefertigt sind. Die nicht abgedeckten Strukturanteile lassen sich dann mittels IR-Licht härten. In einem Folgeschritt werden anschließend die abgedeckten Teile ausgehärtet.

Sind die eingesetzten Pigmente magnetisch ausrichtbar, so kann alternativ die Strukturierung durch Anlegen von Magnetfeldern erzeugt werden. Dies kann wiederum nach verschiedenen Verfahren erfolgen.

Einerseits kann die Strukturierung durch direktes Einschreiben mit einem Permanentmagneten erfolgen, indem man beispielsweise mit dem Magneten über dem Material entlangfährt (magnetischer Kugelschreiber) oder das Material unter einem fixierten Magneten entlangführt. Ferner können auch beide Komponenten gegeneinander beweglich sein. Andererseits können Strukturen auch mittels einer aus einem magnetischen Abschirmmaterial bestehenden Schablone hergestellt werden. Dem Fachmann stehen Abschirmmaterialien unterschiedlichster Form zur Verfügung, wie sie beispielsweise in der Firmenschrift "Magnetische Abschirmungen" der Fa. Vacuumschmelze GmbH, Hanau, Ausgabe 1975 und der dort zitierten Literatur beschrieben sind. Sie enthält neben theoretischen ins-besondere wertvolle praktische Informationen über lieferbare weichmagnetische Werkstoffe und deren Anwendungen. Zur Abschirmung kleiner und mittlerer Streufelder werden hauptsächlich die Werkstoffe aus MUMETALL® oder VACOPERM® 100 eingesetzt. Je nach gewünschter Struktur können Folien, Bänder oder Streifen dieser Materialien bezogen und individuell zugeschnitten werden.

Eine weitere Möglichkeit zur Herstellung der erfindungsgemäßen Materialien besteht in der indirekten Strukturierung beispielsweise in einem UV-härtbaren Medium analog dem oben beschriebenen Verfahren. Hierbei wird die Pigmentbeschichtung zunächst insgesamt einheitlich magnetisch ausgerichtet. Anschließend wird über eine Photomaske belichtet. Durch Aushärtung des belichteten Bereichs ist das Negativ der Maskenstruktur als magnetische Information in der Oberfläche eingeschrieben. Im unbelichteten, nicht ausgehärteten Teil der Oberfläche kann anschließend eine magnetische Umorientierung nach einem der genannten Verfahren oder gar eine Entmagnetisierung durchgeführt werden, so daß letztlich nach Aushärtung der gesamten Oberfläche alle erzeugten Strukturmuster "eingefroren" vorliegen. Alternativ kann auch eine unmagnetisierte Oberfläche über eine Photomaske belichtet werden, so daß der ausgehärtete Teil keine magnetische Information im obigen Sinne entbält. Analog kann dann in den unbelichteten, noch nicht ausgehärteten Bereichen nach den genannten Verfahren strukturiert werden.

Je nach Verwendungszweck lassen sich die einzelnen Schritte der genannten Verfahren in geeigneter Weise miteinander kombinieren, so daß man letztlich optische und magnetische Informationen getrennt oder gleichzeitig nebeneinander vorliegen haben kann.

Die erfindungsgemäßen Materialien zeichnen sich daher durch eine Reihe von Vorteilen aus. Einerseits sind eine geschriebene magnetische Informationen gleichzeitig auch optisch wahrnehmbar, andererseits läßt sich der optische Gesamteindruck, d.h. Struktur kombiniert mit Glanz bzw. Perlglanz nicht photokopieren. Diese herausragende Eigenschaft eröffnet den erfindungsgemäßen Materialien ihre vielseitige Anwendbarkeit auf dem Gebiet des Sicherheitsdrucks. So können beispielsweise Banknoten, Scheckkarten und -vordrucke, Kreditkarten, Ausweispapiere oder Dokumente wie Zertifikate, Aktien oder andere Wertpapiere, Lottoscheine, Briefmarken und dergleichen fälschungssicher nach dem erfindungsgemäßen Verfahren gekennzeichnet werden.

Die magnetische Information einer erfindungsgemäß strukturierten Oberfläche kann auch als magnetisch lesbarer Code beispielsweise auf Scheckkarten verwendet werden.

Darüber hinaus können nach dem erfindungsgemäßen Verfahren Beschriftungen oder Bebilderungen jeglicher Art auf verschiedene Trägermaterialien wie Glas, Metall, Papier, Keramik und dergleichen für Werbezwecke, Informationstafeln und künstlerische oder dekorative Zwecke oder beliebige andere Anwendungsgebiete, wie sie beispielsweise in der DE-OS 37 32 116 beschrieben sind, hergestellt werden.

Zur Erläuterung der Erfindung dienen die folgenden Beispiele

### Beispiel 1

Herstellung eines magnetisch ausrichtbaren Pigments
a) 10 kg Glimmer werden in 200 l vollentsalztem (VE-)-Wasser suspendiert und auf 80 °C erwärmt. Anschließend wird mit 37%iger Salzsäure so angesäuert, daß sich ein pH-Wert zwischen 3 und 4 einstellt. Danach werden innerhalb von 50 min 27 l einer Lösung von 845 ml Eisen(III)chlorid, 750 ml Titan(IV)chlorid-Lösung (360 g TiCl₄/l) und 75 ml konzentrierter Schwefelsäure in 30 l VE-Wasser unter kräftigem Rühren zur Glimmersuspension hinzudosiert.
   Der pH-Wert wird mittels 32%iger Natronlauge im pH-Intervall 3-4 gehalten. Nach beendeter Zugabe wird 30 min nachgerührt und anschließend mit 32%iger Natronlauge ein pH-Wert zwischen 8 und 9 eingestellt und die Suspension mit 1 kg Kaliumnitrat versetzt. Anschließend wird unter Durchleiten von Stickstoff eine Lösung von 30 kg Eisen(II)sulfat, 2 kg Kaliumnitrat und 300 ml konzentrierter Schwefelsäure in 100 l VE-Wasser bis zur Blaufärbung (Magnetit) hinzudosiert. Die Pigmente werden abfiltriert, mit VE-Wasser gewaschen und 16 h bei 100 °C getrocknet.
b) Die so hergestellten Magnetit/Glimmer-Pigmente werden bei 400-900 °C geglüht oder mit Mikrowellen bestrahlt. Dabei ändert sich sowohl die Körperfarbe mit zunehmendem Eisen(III)oxid-Gehalt kontinuierlich von Schwarz nach Rotbraun als auch die Interferenzfarbe des Ausgangspigments, z.B. von Rot nach Violett oder von Blau nach Grün.
c) Alternativ wird ein Magnetit/Glimmer-Pigment durch partielle Reduktion eines Glimmer/α-Eisen(III)oxid-Pigments nach der DE-OS 36 17 430 hergestellt.

### Beispiel 2

Es wird eine Mischung des nach Beispiel 1a hergestellten Magnetit/Glimmer-Pigments (1 Gew% Pigment) in einem Nitrocellulose-Acryllack (Komponenten: 0,5 kg Collodiumwolle E 1160, der Fa. Wolff und Co., Walsrode, 2,1 kg n-Butylacetat, 1,5 kg Ethylacetat, 0,65 kg Acronal® 700 l der Fa. BASF, Ludwigshafen und 0,6 kg Toluol) hergestellt. Die Mischung wird auf einen Pappstreifen aufgerakelt. Der noch feuchte Pappstreifen wird dann auf eine Schablone aus MUMETALL®-Folie aufgelegt. Unter der Folie wird ein Magnetfeld (Stärke: 0,2-0,3 T) angelegt. Dabei orientieren sich die unbedeckten Pigmentteilchen. Im getrockneten Lackfilm bleibt die erzeugte Struktur erhalten.

### Beispiel 3

Analog Beispiel 2, jedoch wird die Mischung auf ein Aluminiumblech aufgerakelt. Man erhält auch hier nach Aushärtung des Lackes eine Fixierung der eingeschriebenen Struktur.

### Beispiel 4

Es wird ein wie in Beispiel 2 beschriebener Pappstreifen beschichtet. Anschließend werden Pigmentteilchen durch Entlangfahren eines beweglichen Permanentmagneten über den Streifen ausgerichtet. Der Schriftzug bzw. das eingeschriebene Bild bleibt nach Aushärtung des Films unverändert.

Analog wird ein nach Beispiel 3 beschichtetes Aluminiumblech strukturiert.

### Beispiel 5

Analog Beispiel 2 werden Pappstreifen mit den nach Beispiel 1b hergestellten Pigmenten behandelt. Die Strukturierung ist ebenfalls deutlich sichtbar.

### Beispiel 6

1,5 g eines nach Beispiel 1a hergestellten Pigments werden in 20 g des oligomeren Epoxidacrylatsystems Laromer® LR 8555 (Fa. BASF, Ludwigshafen) unter Beimischen von 1 g des Initiatorsystems Darocur® 1664 (Fa. Merck, Darmstadt) suspendiert und mittels Lackrührer 5 min homogenisiert. Nach 5 min Standzeit zur Entlüftung wird mittels Kastenrakel auf eine Glasscheibe (10 x 20 cm) eine etwa 15 cm lange und 250 µm dicke Lackschicht aufgebracht. Die Glasplatte wird mit der Beschichtung nach unten auf eine Blechplatte mit Abstandshaltern gebracht. Auf die obere Seite der Glasplatte wird eine Maske mit dem ausgeschnittenen Schriftzug "Merck" direkt aufgelegt. Anschließend wird 15 s mit einer UV-Lampe (Beltron HOK-2) im Abstand von 40 cm belichtet. Mittels eines Magneten (Durchmesser ca. 6 cm; magn. Induktion ca. 0,2-0,3 T) werden die Pigmentteilchen in den unbelichteten Lackzonen einheitlich ausgerichtet. Der Schriftzug "Merck" wurde deutlich lesbar und ist nach Aushärtung des genannten Lackstreifens fixiert. Eine mit einem Farbkopierer hergestellte Photokopie unterscheidet sich durch fehlenden Glanz und schlechter Lesbarkeit deutlich vom Original.

### Beispiel 7

Es wird eine Mischung von 1 g eines nach Beispiel 1 a hergestellten Pigments, 20 g Laromer® EA 81 (Fa. BASF, Ludwigshafen) und 1 g Darocur® 1664 (Fa. Merck, Darmstadt) hergestellt und 5 min mittels Lackrührer homogenisiert. Nach 10 min Standzeit zur Entlüftung wird mittels Kastenrakel auf eine Lackkarte (75 x 175 mm) eine etwa 50 µm dicke Lackschicht aufgezogen. Darauf wird eine Glasscheibe mit Abstandhaltern gelegt, die mit Buchstaben (MERCK) beklebt ist. Anschließend wird 3-5 sec lang analog Beispiel 6 belichtet. Man erkennt jetzt bereits die Strukturierung im Lacksystem. Anschließend wird mit einem Magneten (0,2-0,3 T) im unbelichteten Teil ausgerichtet und abschließend belichtet. Der Schriftzug ist nun deutlich lesbar und fixiert. Eine mit einem Farbkopierer hergestellte Photokopie unterscheidet sich, wie in Beispiel 6 beschrieben, deutlich vom Original.

Analog wird eine auf 100 x 190 mm dimensionierte Japanlackkarte (erhältlich von der Fa. Merck Japan Ltd., Tokyo) strukturiert.

### Beispiel 8

Es wird eine Mischung von 1 g Iriodin® 225 (mit TiO₂ beschichtetes Glimmerschuppenpigment der Fa. Merck, Darmstadt), 20 g Laromer® EA 81 und 1 g Darocur® 1664 analog Beispiel 7 hergestellt und, wie dort beschrieben, auf eine Lackkarte aufgezogen und belichtet. Nach der Belichtung wird die Struktur bereits deutlich sichtbar. Abschließend wird auch der noch unbelichtete Teil durchgeführt. Man erhält einen deutlich lesbaren Schriftzug mit räumlichem Effekt.

Analog wird Iriodin® 504 (mit Fe₂O₃ beschichtetes Glimmerschuppenpigment der Fa. Merck, Darmstadt) eingesetzt. Man erhält das gleiche Ergebnis.

Auch bei diesen beiden Systemen sind Photokopien mühelosvom Original unterscheidbar.

## Patentansprüche

1. Materialien für den Sicherheitsdruck mit einer, plättchenförmige Pigmente enthaltenden Beschichtung, wobei die Beschichtung durch unterschiedliche Orientierung der Pigmentteilchen in definierten Bereichen eine Strukturierung aufweist.

2. Materialien nach Anspruch 1, dadurch gekennzeichnet, daß die Beschichtung Perlglanzpigmente enthält.

3. Materialien nach Anspruch 1 oder 2, dadurch gekennzeichnet, daß die Beschichtung magnetisch ausrichtbare Pigmente enthält.

4. Verfahren zur Herstellung von mit plättchenförmigen Pigmenten beschichteten Materialien für den Sicherheitsdruck, wobei die Beschichtung eine Strukturierung aufweist, dadurch gekennzeichnet, daß man das Material mit einer plättchenförmige Pigmente enthaltenden Formulierung beschichtet, in welcher die Pigmentteilchen zunächst beweglich sind, anschließend durch äußere Einwirkung in definierten Bereichen eine unterschiedliche Orientierung der Pigmentteilchen erzeugt und letzlich alle Pigmentteilchen in der Beschichtung fixiert.

5. Verfahren nach Anspruch 4, dadurch gekennzeichnet, daß die Formulierung aus einem härtbaren Medium besteht.

6. Verwendung der Materialien nach mindestens einem der Ansprüche 1, 2 oder 3 auf dem Gebiet des Sicherheitsdrucks.

7. Verwendung der Materialien nach Anspruch 3 in magnetischen Codesystemen.

## Claims

1. Security printing materials having a coating comprising platelet-shaped pigments, wherein the coating exhibits structuring in defined areas due to differential orientation of the pigment particles.

2. Materials according to Claim 1, characterized in that the coating includes pearl lustre pigments.

3. Materials according to Claim 1 or 2, characterized in that the coating includes magnetically orientable pigments.

4. Process for the preparation of security printing materials coated with platelet-shaped pigments, wherein the coating exhibits structuring, characterized in that the material is coated with a formulation comprising platelet-shaped pigments in which the pigment particles are initially mobile, differential orientation of the pigment particles is then produced in defined areas by external action, and finally all pigment particles are fixed in the coating.

5. Process according to Claim 4, characterized in that the formulation comprises a curable medium.

6. Use of the materials according to at least one of Claims 1, 2 or 3 in the field of security printing.

7. Use of the materials according to Claim 3 in magnetic coding systems.

## Revendications

1. Matériaux pour impression de sécurité avec un revêtement contenant des pigments en forme de plaquettes, ce revêtement présentant une structuration par orientation différente des particules de pigment dans des domaines définis.

2. Matériaux selon la revendication 1, caractérisés en ce que le revêtement contient des pigments nacrés.

3. Matériaux selon la revendication 1 ou 2, caractérisés en ce que le revêtement contient des pigments orientables par un moyen magnétique.

4. Procédé de préparation de matériaux pour impression de sécurité recouverts de pigments en forme de plaquettes, dans lesquels le revêtement présente une structuration, caractérisé en ce qu'on recouvre le matériau avec une formulation contenant des pigments en forme de plaquettes, dans laquelle les particules de pigment sont tout d'abord mobiles, puis on produit par une action extérieure une orientation différente des pigments dans des domaines définis et enfin on fixe toutes les particules de pigment dans le revêtement.

5. Procédé selon la revendication 4, caractérisé en ce que la formulation se compose d'un milieu durcissable.

6. Application des matériaux selon au moins l'une des revendications 1, 2 ou 3 dans le domaine de l'impression de sécurité.

7. Application des matériaux selon la revendication 3 dans des systèmes de codes magnétiques.
